Europäisches Patentamt

European Patent Office

Office européen des brevets

(11) Veröffentlichungsnummer: **0 093 279**
**B1**

## EUROPÄISCHE PATENTSCHRIFT

(45) Veröffentlichungstag der Patentschrift: **02.03.88**

(51) Int. Cl.⁴: **C 08 F 8/42, C 08 J 7/12**

(21) Anmeldenummer: **83103474.9**

(22) Anmeldetag: **11.04.83**

(54) Metallisierte Polymergranulate, ihre Herstellung und Verwendung.

(30) Priorität: 24.04.82 DE 3215413

(43) Veröffentlichungstag der Anmeldung:
09.11.83 Patentblatt 83/45

(45) Bekanntmachung des Hinweises auf die
Patenterteilung:
02.03.88 Patentblatt 88/09

(84) Benannte Vertragsstaaten:
CH DE FR GB IT LI NL

(56) Entgegenhaltungen:
DE-A-1 958 639
FR-A-2 302 319
GB-A-765 284
US-A-3 281 403

(73) Patentinhaber: BAYER AG
Konzernverwaltung RP Patentabteilung
D-5090 Leverkusen 1 Bayerwerk (DE)

(72) Erfinder: Sirinyan, Kirkor, Dr.
Bamberger Strasse 16
D-5090 Leverkusen 1 (DE)
Erfinder: Merten, Rudolf, Dr.
Berta-von-Suttner-Strasse 55
D-5090 Leverkusen 1 (DE)

Courier Press, Leamington Spa, England.

**Beschreibung**

Die Erfindung betrifft Polymergranulate, die mit einer Metallauflage versehen sind, ihre Herstellung durch stromlose chemische oder durch eine kombinierte stromlose chemische und galvanische Metallisierung und ihre Verwendung als antistatisch ausgerüstete und elektromagnetische Wellen abschirmende Werkstoffe.

Organische synthetische und natürliche Polymere sind im allgemeinen elektrische Isolatoren. Ihr spezifischer Widerstand liegt zwischen $10^{10}$ und $10^{18}\Omega$ . cm.

Werden spezielle Polymere mit polykonjugierter Struktur der Hauptkette mit starken Oxidations- oder Reduktionsmitteln behandelt, so fällt ihr spezifischer Widerstand von ca. $10^9$ auf ca. $10^1\Omega$ cm (Organic Semiconductors, F. Gutmann, and L. E. Lyons, John Wiley and Sons, Inc., New York (1967)).

Solche konjugierten Polymerisate sind jedoch nicht nach in der Kunststofftechnik üblichen Methoden wie Spritzgießen, Extrudieren, Kaschieren verarbeitbar und nicht in gängigen organischen und anorganischen Lösungsmitteln löslich.

Eine andere Möglichkeit zur antistatischen Ausrüstung von Polymeren ist der Zusatz von Charge-Transfer-Komplexen, beispielsweise auf der Basis von Tetrathiofulvalen oder Tetracyanchinodimethan. Die Einarbeitung dieser Komplexe in Polymermatrices ist sehr aufwendig und daher für die kunststoffverarbeitende Industrie außer in ganz speziellen Fällen nicht interessant.

Ferner ist bekannt, Antistatika auf die Oberfläche eines fertigen Kunststoffteiles aufzubringen oder während der Herstellung direkt in die Polymermatrices einzuarbeiten, z.B. Fettalkohole und quartäre Ammoniumsalze.

Im ersten Fall wird nur eine zeitlich begrenzte antistatische Wirkung erzielt, im zweiten Fall beeinträchtigt die Einarbeitung von Antistatika die ursprünglichen physikalischen und chemischen Eigenschaften des Polymermaterials.

Es ist weiter bekannt, daß man Polymeroberflächen auf chemischem oder physikalischem Wege mit einer elektrisch leitenden Metallschicht versehen kann ("Kunststoff-Galvanisierungshandbuch für Theorie und Praxis", Eugen-G.-Lenze-Verlag, Saulgau 1973). Diese Metallauflagen weisen jedoch eine unerwünscht hohe spezifische elektrische Leitfähigkeit auf. Ein weiterer Nachteil besteht darin, daß dieses Verfahren nur bei bestimmten Polymeren möglich ist.

Eine weitere Möglichkeit zur antistatischen Ausrüstung von Polymeren besteht darin, Metallfäden, Metallfasern, Metallpulver oder metallisierte Glas- und Keramikfasern einzuarbeiten.

Nachteilig ist, daß eine antistatische Wirkung nur dann erzielt wird, wenn man einen hohen Gehalt an Metall in das Polymer einarbeitet, was wiederum die physikalischen Eigenschaften, wie Zugfestigkeit, Abrieb- und Reißbeständigkeit, E-Modul und Dehnung herabsetzt.

Nachteilig ist ferner, daß eine homogene Metallverteilung im Polymerformkörper nicht erzielt wird.

Es bestand daher die Aufgabe, polymere Werkstoffe zur Verfügung zu stellen, aus denen in einfacher Weise antistatisch ausgerüstete Polymerformkörper hergestellt werden können.

Diese Aufgabe wird dadurch gelöst, daß man Granulate von synthetischen oder natürlichen Polymerisaten durch stromlose chemische oder durch eine kombinierte stromlose chemische und galvanische Metallisierung mit einer Metallauflage versieht und dann nach in der Kunststoffindustrie üblichen Methoden verarbeitet.

Gegenstand der Erfindung sind daher Polymergranulate mit einem Einzelkornvolumen von 0,01 bis 150 mm³ und einer Metallauflage von 0,5 bis 35 Gew.-%, bezogen auf Polymer.

Vorzugsweise beträgt das Einzelkornvolumen 0,1 bis 50 mm³ und die Metallauflage 3 bis 25 Gew.-%.

Die Granulate können jede beliebige Form wie Würfel, Zylinder, Kugel, Stäbchen, Halbkugel oder Pyramide aufweisen.

Bei den Polymeren kann es sich um Homo-, Co- oder Pfropf-Copolymere handeln. Synthetische Polymere sind bevorzugt. Es eignen sich z.B. Polypropylen, Polyvinylchlorid, Polyvinylacetat, Polyethylen, Polystyrol, ABS- Pfropf- bzw. Copolymerisate, Polybutadien, Polyisopren, Polyethylenoxid, Polyester, Polyamide, Polyhydantoin, Polyharnstoffe, Polyimide, Polycarbonate, Epoxidharze bzw. ihre Mischungen und Legierungen.

Die Polymeren können die in der Kunststoffverarbeitung üblichen Füll- und Zusatzstoffe, wie Versteifungs-, Festigungs-, Verformungs-, Stabilisierungsmittel enthalten.

Bevorzugte Metalle sind Nickel, Kupfer, Silber, Cobalt, Zinn, Zink, Blei, Cadmium, Chrom und Gold, insbesondere Kupfer und Nickel.

Einer weiterer Gegenstand der Erfindung ist ein Verfahren zur Herstellung der mit einer Metallauflage versehenen Granulate, das dadurch gekennzeichnet ist, daß auf die Granulatoberfläche ohne vorheriges Beizen Metalle der 1. oder 8. Nebengruppe des Periodensystems der Elemente (PSE) aufgebracht und die Granulate stromlos naßchemisch und gegebenenfalls zusätzlich galvanisch metallisiert werden.

Die Aktivierung der Granulatoberfläche kann mit ionischen oder metallorganischen Verbindungen der Elemente der 1. oder 8. Nebengruppe des PSE oder mit kolloidalen Metallen dieser Gruppen durchgeführt werden, wobei die ionischen und metallorganischen Verbindungen nach dem Aufbringen reduziert werden müssen.

Als Aktivierungsmetall ist Palladium bevorzugt, insbesondere in Form einer metallorganischen Verbindung.

Die für die Metallbindung erforderlichen Gruppen des organischen Teiles der oben aufgeführten metallorganischen Verbindungen sind an sich bekannt. Es handelt sich zum Beispiel um C—C— oder C—N—Doppel- und Dreifachbindungen und um Gruppen, die einen Chelat-Komplex ausbilden können, z.B. OH—, SH—, CO—, SC— oder COOH-

—Gruppen. Eine Verwendung der metallorganischen Verbindungen der Elemente der 1. und 8. Nebengruppe des Periodensystems, die außer den zur Metallbindung erforderlichen Gruppen hinaus wenigstens eine weitere funktionelle Gruppe aufweisen, hat den Vorteil, daß eine bessere Fixierung der Aktivierungskeime an der Substratoberfläche erzielt wird.

Besonders geeignet für eine Fixierung des Aktivators an der Substratoberfläche sind funktionelle Gruppen wie Carbonsäuregruppen, Carbonsäurehalogenidgruppen, Carbonsäureanhydridgruppen, Carbonestergruppen, Carbonamid- und Carbonimidgruppen, Aldehyd- und Ketongruppen, Ethergruppen, Sulfonsäurehalogenidgruppen, Sulfonsäureestergruppen, halogenhaltige heterocyclische Reste, wie Chlortriazinyl-, -pyrazinyl-, -pyrimidinyl- oder -chinoxalinylgruppen, aktivierte Doppelbindungen, wie bei Vinylsulfonsäure- oder Acrylsäurederivaten, Aminogruppen, Hydroxylgruppen, Isocyanatgruppen, Olefingruppen und Acetylengruppen sowie Mercaptogruppen und Epoxidgruppen, ferner höherkettige Alkyl- oder Alkenylreste ab $C_8$, insbesondere Olein-, Linolein-, Stearin- oder Palmitingruppen.

Eine Verwendung von oligomeren, polymeren oder präpolymeren metallorganischen Verbindungen der Elemente der 1. und 8. Nebengruppe des PSE hat den zusätzlichen Vorteil, daß für eine ausreichende Aktivierung eine geringere Edelmetallmenge pro Flächeneinheit erforderlich ist.

Die organometallischen Aktivatoren werden als Lösung, Dispersion, Emulsion oder Suspension in einem organischen Lösungsmittel oder als Mischung mit einem organischen Lösungsmittel eingesetzt. Auch Lösungsmittelmischungen können Verwendung finden.

Bevorzugt werden organische Lösungsmittel verwendet, die die Polymeroberfläche anquellen. Quellmittel für bestimmte Polymere sind aus Polymer Handbook, J. Brandrup, E. H. Immergut, John Wiley and Sons, Inc., New York (1974) bekannt.

Geeignete Lösungsmittel sind niedere und höhere Alkohole, Aldehyde, Ketone, halogenierte Kohlenwasserstoffe, einfache oder gesättigte Kohlenwasserstoffe, organische Säuren und Ester, sowie verflüssigte Gase wie Butan, Propylen und 1,4-cis-Butadien.

Lösungsmittelgemische können als weitere Lösungsmittel Benzin, Ligroin, Toluol, n-Hexan usw. enthalten. Die Aktivierungsbäder können anionische Emulgatoren wie Alkalisalze von Palmitinsäure, Stearinsäure, Ölsäure, Salze von Sulfonsäuren, die auf der Basis von 6—20 Kohlenstoff-Atome enthaltenden Paraffinen durch Sulfochlorierung hergestellt werden, nicht-ionogene Emulgatoren, die beispielsweise durch Ethoxylierung von langkettigen Alkoholen oder Phenolen herstellbar sind, kationische Emulgatoren, wie Salze langkettiger Amine mit 12 bis 20 C-Atomen oder quartären Ammoniumverbindungen mit langkettigen Olefinen oder Paraffinestern, Schutzkolloide auf der Basis von makromolekularen Verbindungen, wie Gelatine, Pektine, Alginate, Methylcellulose, ionische und neutrale Polyurethandispersionen bzw. ihre oligomeren Derivate, Polyvinylalkohole, Polyvinylpyrrolidon, Polymethylvinylacetat, feinverteilte wasserlösliche Mineralien wie Tonerde, Kieselgur, Calciumphosphate, Alkali- und Erdalkalisalze wie NaCl, $CaCl_2$, $MgSO_4$, $K_3PO_4$ enthalten.

Die Menge der oben aufgeführten Zusatzstoffe kann bezogen auf das vorliegende Medium von 0,01—20 Gew.-% variiert werden.

Die Granulate werden mit den Aktivierungsbädern benetzt, wobei die Einwirkungsdauer vorzugsweise 1 Sekunde bis 90 Minuten beträgt.

Nach den Benetzung wird das organische Lösungsmittel entfernt und die metallorganische Verbindung reduziert.

Es kann erforderlich sein, die Granulate durch Spülen von den Reduktionsmittelresten zur reinigen. Die so aktivierten Granulate werden stromlos metallisiert.

Eine bevorzugte Ausführungsform des erfindungsgemäßen Verfahrens besteht darin, daß die Reduktion im Metallisierungsbad gleich mit den Reduktionsmittel der stromlosen Metallisierung durchgeführt wird. Diese Ausführungsform ist für aminoboranhaltige Nickelbäder oder formalinhaltige Kupferbäder geeignet. Als in dem erfindungsgemäßen Verfahren einsetzbare Metallisierungsbäder kommen, bevorzugt Bäder mit Nickelsalzen, Cobaltsalzen, Kupfersalzen, Gold- oder Silbersalzen oder deren Gemische untereinander in Betracht. Derartige chemische Metallisierungsbäder sind in der Technik der stromlosen Metallisierung bekannt.

Die mit einer elektrisch leitenden Metallschicht versehenen Granulate werden gegebenenfalls auf galvanischem Wege verstärkt. Als in dem erfindungsgemäßen Verfahren einsetzbare Galvanisierungsbäder kommen bevorzugt Bäder mit Ni-, Cu-, Co-, Au-, Ag-, Sn-, Zn-, Pb-, Cr-, Cd-Salzen oder deren Gemische untereinander in Betracht. Solche Galvanisierungsbäder sind in der Galvanotechnik bekannt.

Die mit einer Metallauflage versehenen Granulate werden nach den in der Kunststofftechnik üblichen Verfahren wie Extrudieren, Kalandrieren, Blasen, Pressen oder Spritzgießen verarbeitet, wobei die beiden letzten Methoden bevorzugt, sind. Die Verteilung des Metalls in den erhaltenen Formkörpern ist weitgehend homogen.

Die Polymerformkörper weisen hervorragende, dauernde antistatische Eigenschaften auf. Zusätzlich schirmen sie elektromagnetische Wellen ab, so daß aus ihnen z.B. Gehäuse von elektronischen Rechnern hergestellt werden können, die gegen den schädlichen Einfluß solcher Wellen geschützt sind.

Ein anderer wichtiger Einsatz von metallisierten Polymergranulaten liegt im dekorativen Bereich. Hierzu werden erfindungsgemäß metallisierte Granulate mit einer Metallauflage von 0,5—10 Gew.-% bevorzugt eingesetzt, wobei die Mengen von 0,5—5,0 Gew.-% besonders zu bevorzugen sind.

Polymere Werkstoffe auf der Basis von oben angeführten Granulaten weisen einen hohen "Metallic-Effekt" auf und haben eine vollständig glatte, glänzende Oberfläche. Im Gegensatz zu den zur Zeit gängigen mit "Metallic-Lackierungen" versehenen polymeren Werkstoffen sind diese kratz- und stoßunempfindlich, da nicht nur die Oberfläche, sondern auch die Matrix Metallagglomerate (Pigmente) enthält.

Selbstverständlich kann der gleiche "Metallic-Effekt" durch Einarbeiten von solchen Granulaten in Duroplasten, wie Epoxidharze und Phenolharze oder durch Beimengen bzw. Mischen mit nicht metallisierten Polymergranulaten erzielt werden.

### Beispiel 1

50 g Granulate aus Acrylnitril-Butadien-Styrol-Pfropfcopolymerisat (ABS) mit einem Einzelkornvolumen von ca. 15 mm$^3$ werdem bei Raumtemperatur 30 Sekunden in ein Aktivierungsbad aus 0,5 g Isobutylvinyletherpalladiumdichlorid in 1 1 1,1,1-Trichlorethan getaucht, bei Raumtemperatur getrocknet und 45 Minuten in 10 l eines wäßrigen Vernickelungsbades, das pro Liter 3,5 g Dimethylaminoboran, 30 g Nickelchlorid und 10 g Citronensäure enthält und mit konz. Ammoniaklösung auf pH 8,2 eingestellt ist, eingetaucht.

Die metallisch glänzenden Granulate werden dem Bad entnommen, mit destilliertem Wasser gewaschen und bei 70°C im Trockenschrank getrocknet.

Die vernickelten Granulate haben eine Metallauflage von 5 Gew.-%. Eine daraus hergestellte Preßplatte (100 × 100 mm) mit der mittleren Stärke von 2,1 mm hat einen spezifischen Durchgangswiderstand von ca. 100 Ω und einen elektrischen Oberflächenwiderstand von etwa 10 Ω.

### Beispiel 2

10 kg des nach Beispiel 1 erhaltenen ABS-Granulats werden in einem Aktivierungsbad aus 4-Cyclohexen-1,2-dicarbonsäureanhydrid-palladiumdichlorid und 5 l Methanol aktiviert und in einem Vernickelungsbad gemäß Beispiel 1 in 8 Minuten mit einer Nickelauflage von ca. 0,8 Gew.-% bezogen auf Polymergewicht versehen.

Eine daraus hergestellte ABS-Spritzgußplatte mit der mittleren Stärke von 1,5 mm hat eine metallisch glänzende und glatte Oberfläche.

### Beispiel 3

1 kg Polyamid-6,6-granulat mit einem Einzelkornvolumen von 20 mm$^3$ wird bei Raumtemperatur in eine Aktivierungslösung aus 1,8 g 9-Octadecen-1-olpalladiumdichlorid in 1 l Methanol getaucht, getrocknet und dann in einem chemischen Nickelbad gemäß Beispiel 1 vernickelt.

Man bekommt Granulate mit einer Metallauflage von 4,5 Gew.-%, welche zu Kunststoffformkörpern verspritzt werden.

### Beispiel 4

50 g Polycarbonatgranulat werden gemäß Beispiel 1 aktiviert und dann in einem chemischen Nickelbad gemäß Beispiel 1 im Verlaufe von 8,5 Minuten vernickelt.

Man erhält vernickelte Granulate mit einer Metallauflage von 1,0 Gew.-%, die in einem wäßrigen galvanischen Verkupferungsbad, das pro Liter 200 g CuSO$_4$ × 5 H$_2$O 30 g H$_2$SO$_4$ (g = 1,84 g/cm$^3$) enthält, als Kathode geschaltet bei 3,0 Ampère mit 15 Gew.-% Kupfer, bezogen auf Polymer verstärkt werden.

### Beispiel 5

50 g des in Beispiel 1 beschriebenen Granulates werden nach Beispiel 3 aktiviert, getrocknet und in einem wäßrigen Verkupferungsbad, das in 1 l 10 g CuSO$_4$, 5 ml 37 %ige wäßrige Formalinlösung und 15 g Seignette-Salz enthält und mit 20 ml 30 gew.-%iger NaOH-Lösung auf pH 12 bis 13 eingestellt ist, bei 35°C stromlos verkupfert. Die Granulate weisen eine Metallauflage von 4 Gew.-% auf.

Eine daraus hergestellte ABS-Preßplatte (100 × 100 mm) mit der mittleren Stärke von 2 mm hat einen spezifischen Durchgangswiderstand von ca. 150 Ω und einen elektrischen Oberflächenwiderstand von ca. 10$^8$ Ω.

### Beispiel 6

100 g Polystyrolgranulat mit einem Einzelkornvolumen von ca. 4 mm$^3$ wird gemäß Beispiel 1 aktiviert und dann in einem chemischen Nickelbad gemäß Beispiel 1 in 10 Minuten vernickelt. Die Nickelauflage beträgt 0,9 Gew.-%. Die Granulate werden nach Beispiel 4 galvanisch mit 15 Gew.-% Kupfer verstärkt.

### Beispiel 7

50 g Celluloseacetatgranulat werden nach Beispiel 1 in 2 Stunden mit einer Nickelauflage von 11 Gew.-% versehen und dann zu Formkörpern verspritzt.

### Beispiel 8

100 g Polyethylengranulat werden in 15 Sekunden mit 0,6 g Butadienpalladiumdichlorid in 1 l CH$_2$Cl$_2$ bei Raumtemperatur aktiviert, getrocknet und nach Beispiel 1 vernickelt.

Nach 30 Minuten werden die Granulate dem Bad entnommen, mit destilliertem Wasser gewaschen und bei 100°C im Trockenschrank im Verlaufe von 4 h getrocknet. Man bekommt Polymergranulate mit einer Metallauflage von 3,0 Gew.-%.

### Beispiel 9

5,0 kg Granulate aus ABS werden nach Beispiel 1 mit einer 0,8 Gew.-%igen Ni-Auflage versehen und dann thermoplastisch verarbeitet.

Man bekommt einen Polymerwerkstoff mit vollständig glatter, glänzender Oberfläche und einem hohen "Metallic-Effekt", dessen physikalische Eigenschaften, wie Kerbschlagfestigkeit, Mertenstemperatur, Erweichungsbereich, Zug-Dehnungsverhalten von den Metallpartikeln nicht beeinflußt werden.

### Beispiel 10

3,0 kg Granulate aus handelsüblichem Polyamid 6 werden nach Beispiel 3 mit einer 0,6 Gew.-%igen Ni-Auflage versehen und dann thermoplastisch verarbeitet. Man bekommt einen Probekörper mit einer hohen Oberflächenqualität und einem "Metallic-Effekt", dessen physikalische Eigenschaften von den Metallpartikeln nicht beeinflußt werden.

### Beispiel 11

2,5 kg Granulate aus ABS werden mit einer kolloidalen Pd-Lösung der Fa. Schering AG, Berlin, aktiviert, mit einer salzsauren SN$^{2+}$-Lösung sensibilisiert, in einem chemischen Cu-Bad mit einer 0,7 Gew.-%igen Cu-Auflage versehen und dann thermoplastisch verarbeitet.

Man bekommt ein Versuchsgut mit einem "Kupfer-Gold-Metallic-Effekt".

### Beispiel 12

5,0 kg Granulate aus handelsüblichem Polypropylen werden nach Beispiel 8 mit einer 0,5 Gew.-%igen Ni-Auflage versehen und dann thermoplastisch verarbeitet. Man bekommt einen Probekörper mit einer glatten Oberfläche und einem "Metallic-Effekt", dessen Eigenschaften wie Zugfestigkeit, Erweichungsbereich, von den Metallpartikeln nicht beeinflußt werden.

**Patentansprüche**

1. Polymergranulate mit einem Einzelkornvolumen von 0,01 mm$^3$ bis 150 mm$^3$ und einer Metallauflage von 0,5 bis 35 Gew.-% bezogen auf Polymer.

2. Polymergranulate nach Anspruch 1 mit einem Einzelkornvolumen von 0,1 bis 50 mm$^3$ und einer Metallauflage von 3 bis 25 Gew.-%.

3. Polymergranulate nach Anspruch 1, mit einer Metallauflage aus Nickel, Kupfer, Silber, Cobalt, Gold, Zinn, Zink, Blei, Chrom oder Cadmium.

4. Polymergranulate nach Anspruch 1 mit einer Metallauflage aus Nickel, Cobalt oder Kupfer.

5. Verfahren zur Herstellung von Polymergranulaten gemäß Anspruch 1, dadurch gekennzeichnet, daß auf die Granulatoberfläche ohne vorheriges Beizen Metalle der 1. oder 8. Nebengruppe des Periodensystems der Elemente aufgebracht und die Granulate stromlos naßchemisch und gegebenenfalls zusätzlich galvanisch metallisiert werden.

6. Verfahren nach Anspruch 5, dadurch gekennzeichnet, daß die Aktivierung mit Palladium, insbesondere in Form einer metallorganischen Verbindung vorgenommen wird.

7. Verfahren nach Anspruch 5, dadurch gekennzeichnet, daß stromlos naßchemisch ein Metall der Gruppe Nickel Kupfer, Cobalt, Gold oder Silber und gegebenenfalls anschließend galvanisch ein Metall der Gruppe Nickel Kupfer, Cobalt, Gold, Silber, Zinn, Zink, Blei, Chrom oder Cadmium aufgebracht wird.

8. Verfahren nach Anspruch 6, dadurch gekennzeichnet, daß die Aktivierung mit einer palladiumorganischen Verbindung zusammen mit einem Lösungsmittel vorgenommen wird, das ein Quellmittel für das zu metallisierende Granulat darstellt.

9. Verwendung der mit einer Metallauflage versehenen Granulate nach Anspruch 1 zur Herstellung von Formkörpern.

**Revendications**

1. Granulés de polymère ayant un volume des grains individuels de 0,01 mm$^3$ à 150 mm$^3$ et portant un dépôt métallique de 0,5 à 35 % en poids par rapport au polymère.

2. Granulés de polymère suivant la revendication 1, avec un volume des grains individuels de 0,1 à 50 mm$^3$ et portant un dépôt métallique de 3 à 25 % en poids.

3. Granulés de polymère suivant la revendication 1, portant un dépôt métallique de nickel, cuivre, argent, cobalt, or, étain, zinc, plomb, chrome ou cadmium.

4. Granulés de polymère suivant la revendication 1, portant un dépôt métallique de nickel, cobalt ou cuivre.

5. Procédé de production de granulés de polymère suivant la revendication 1, caractérisé en ce qu'on dépose à la surface des granulés, sans attaque chimique préalable, des métaux du premier ou du huitième sous-groupe du Système Périodique des Eléments, et on métallise les granulés par voie chimique humide autocatalytique et en outre, le cas échéant, par voie galvanique.

6. Procédé suivant la revendication 5, caractérisé en ce que l'activation est effectuée avec du palladium, notamment sous la forme d'un composé organométallique.

7. Procédé suivant la revendication 5, caractérisé en ce qu'on applique par voie chimique humide autocatalytique un métal du groupe du nickel, du cuivre, du cobalt, de l'or ou de l'argent puis, le cas échéant par voie galvanique, un métal du groupe du nickel, du cuivre, du cobalt, de l'or, de l'argent, de l'étain, du zinc, du plomb, du chrome ou du cadmium.

8. Procédé suivant la revendication 6, caractérisé en ce qu'on effectue l'activation avec une composé organique de palladium conjointement avec un solvant qui constitue un agent gonflant pour les granulés à métalliser.

9. Utilisation des granulés pourvus d'une couche métallique suivant la revendication 1 pour la production de piéces moulées.

**Claims**

1. Polymer granules having a single particle volume of 0.01 mm$^3$ to 150 mm$^3$ and a metal layer of 0.5 to 35% by weight, relative to polymer.

2. Polymer granules according to Claim 1, having a single particle volume of 0.1 to 50 mm$^3$ and a metal layer of 3 to 25% by weight.

3. Polymer granules according to Claim 1, having a metal layer of nickel, copper, silver, cobalt, gold, tin, zinc, lead, chromium or cadmium.

4. Polymer granules according to Claim 1, having a metal layer of nickel, cobalt or copper.

5. Process for preparing polymer granules according to Claim 1, characterized in that, without prior adhesion-improving treatment, metals of the secondary group I or VIII of the periodic table of the elements are applied to the surface of the granules, and the granules are then subjected to electroless wet chemical metallization and, if appropriate, also electroplating.

6. Process according to Claim 5, characterized in that the activation is carried out with palladium, in particular in the form of an organometallic compound.

7. Process according to Claim 5, characterized in that a metal from the group comprising nickel, copper, cobalt, gold and silver is applied in an electroless wet chemical treatment and a metal from the group comprising nickel, copper, cobalt, gold, silver, tin, zinc, lead, chromium and cadmium is then applied, if appropriate, by electroplating.

8. Process according to Claim 6, characterized in that the activation with an organopalladium compound is carried out together with a solvent which is a swelling agent for the granules to be metallized.

9. Use of the granules provided with a metal layer, according to Claim 1, for preparing shaped articles.